# EUROPEAN PATENT APPLICATION

(11) **EP 3 381 875 A1**
(43) Date of publication of application: **03.10.2018**
(21) Application number: 17164432.1
(22) Date of filing: 31.03.2017
(51) Int. Cl.: C03C 17/00

(54) **COATING APPARATUS FOR CONTAINERS WITH MEANS FOR PRESSURE REGULATION**

(71) Applicant: ARKEMA B.V., 3196 Ke Vondelingenplaat-Rotterdam (NL)
(72) Inventor: VAN DIS, Bram, 4756 AN KRUISLAND (NL)
(74) Representative: Senff, Holger

(57) **Abstract**

The present invention relates to a coating apparatus also called coating tunnel or coating hood for applying a protective coating to hollow glass containers.

In particular it relates to a coating apparatus also called coating tunnel or coating hood with means for reducing the pressure inside the coating apparatus.

More particularly the present invention relates to a coating apparatus also called coating tunnel or coating hood with specific means for reducing the pressure inside the coating apparatus or regulating the pressure inside the coating apparatus for reducing the loss of the carrier gas comprising a coating compound for applying the protective coatings to glass containers.

## Description

### [Field of the invention]

The present invention relates to a coating apparatus also called coating tunnel or coating hood for applying a protective coating to hollow glass containers.

In particular it relates to a coating apparatus also called coating tunnel or coating hood with means for reducing the pressure inside the coating apparatus.

More particularly the present invention relates to a coating apparatus also called coating tunnel or coating hood with specific means for reducing the pressure inside the coating apparatus or regulating the pressure inside the coating apparatus for reducing the loss of the carrier gas comprising a coating compound for applying the protective coatings to glass containers.

### [Technical problem]

Hollow glass containers are produced from molten glass at molds at high temperatures. As the surface of these containers is fragile and in order to preserve the strength of the glass and to prevent any direct glass to glass contact of the respective containers in order to avoid damage, they are surface coated with a wax coating which will not attach to clean glass. Therefore a coating directly after forming of the container is needed.

Such a coating that includes tin or tin tetrachloride, titanium or other heat decomposable metallic or organometallic compounds protects the glass container surface in from damage such as abrasions and scratches, which result in a loss of tensile strength for the glass container. The need for high tensile strength in a glass container is particularly acute when containers are mass produced, move rapidly in close proximity along high speed conveyor lines.

This coating application is done inside a coating apparatus also called a coating tunnel or coating hood with a so called hot end coating by chemical vapor deposition usually in forming a thin layer of a metal oxide, for example tin oxide. The objective is to coat the outside of the bottle with a homogenous even layer except for the so called finish.

The coating tunnel or coating hood receives the glass containers via a conveyer belt from the glass container making equipment with a relatively high speed, meaning between 0.3 up to 1.5 m/s which corresponds to approximately 90 to 700 glass containers per minute. The temperature of the containers excess 400°C at the surface of the containers, so that when the heat decomposable inorganic metallic or organometallic compound (coating compound) is applied thereto, said compound reacts immediately and is converted to a metal oxide coating. The coating compound is fed in the coating tunnel and circulates inside with the aid of a carrier gas around the passing glass containers.

As the glass containers pass the coating hood at this high speed they risk to draw the coating compound out of the tunnel when leaving the hood through the outlet. The coating compound can attack building components and give health and safety issues. A venting system has to be installed for above mentioned reasons. For avoiding and minimizing this, the carrier gas comprising the coating compound is sucked into an exhaust system and is discarded. Consequently the coating compounds and chemicals are lost and the coating performance in view of introduced coating chemical is rather low.

On the other side when entering the tunnel through the inlet the glass containers draw in fresh air from the outside. In doing so they dilute the coating compound inside the tunnel. In order to apply a minimum necessary coating thickness on the glass containers more coatings compound has to be introduced in order to guarantee the required concentration of the coating chemical in the coating hood or tunnel for the chemical vapor deposition.

There is still the need for more efficient glass coating hoods, with low losses of the coating compound material to the atmosphere, reduce the exposure in the surroundings of the hood towards the coating chemicals, reduce the loss of coating compound and a homogeneous application of the coating on the glass container.

A principal objective of the present invention is to reduce the exposure in the surroundings of the hood towards the coating chemicals and to reduce the loss of coating compound.

Another objective of the present invention is to have a more homogenous distribution of the coating on the surface of the glass containers and reduce the variation of the thickness of the coating on the glass container surface.

Another objective of the present invention is to lower the discharge of the coating chemical to the surroundings.

An objective of the present invention is to have a lower consumption of the coating chemical while applying the same thickness of coating to the glass container.

Still another objective of the present invention is to lower the emissions of chemicals in the coating area and near the coating tunnel or coating hood and reduce the exposure of chemicals in the surrounding working area.

Again another objective of the present invention is to decrease the cleaning intervals of the coating hood and make the cleaning of the equipment easier.

An additional objective of the present invention is to provide a coating hood with a better efficiency, coating more bottles at the same time.

Surprisingly it has been found that with the incorporation of means for lowering the pressure in the coating apparatus, some or several of before mentioned problems can be solved.

### [BACKGROUND OF THE INVENTION ]Prior art

Coating apparatus for glass containers and the respective standard components are well known from the prior art.

The document US 4,389,234 describes a glass coating hood possessing two or multiple loops. The coating is first fed into an innermost loop and then in an outermost loop. There is also a possibility of using a third loop, but all loops are recirculating loops in order to make better use of the coating material. Consequently the concentration of the coating compound decreases which each recirculating loop. At the end the non used coating compound enters an exhaust system.

The document US 5,140,940 describes also a double loop coating hood, as described before. The coating apparatus based on its respective embodiments contains single or multiple air circulating loops.

The document EP0378116 describes a hot end coating apparatus. The hot end coating apparatus has two additional separate air circuits in the inlet and outlet region of a vapour-deposition hood. The air circuits produce two opposite flow zones flowing through the vapour-deposition hood in the transverse direction, the inner flow zone being enriched to the maximum degree with a coating agent and the outer flow zone forming a protective air curtain consisting of the used air from the coating zone, the degree of enrichment of the said air being correspondingly lower. However two additional feed points of the coating agent are needed one for each circuit.

The document WO2001/0255503 describes a glass container coating hood having additional loops; in one embodiment one loop of air or in another embodiment the hood uses counter current loops of air for carrying the coating. The coating hood comprises means for shaping the air flow.

The document WO96/33955 describes a method and apparatus for applying a layer to bottles. The method is made by a coating apparatus that comprises a gas curtain screening apparatus arranged before the inlet and/or after the outlet of the coating tunnel. The gas curtain is fed by pure gas, no coating causing chemical is added, nitrogen or ambient air are exemplified, in order to avoid clogging of the outflow openings.

The document WO2014/177651 discloses a coating hood having an air entry and a loop returning the air enriched with the coating compound and carrier gas from the outlet to the inlet of the coating hood.

The document WO2016/207307 discloses a coating hood having an air entry and a loop separation the first transferring the air enriched with the coating compound and carrier gas from the outlet to the inlet of the coating hood the second returning the air enriched with the coating compound and carrier gas close to the air entry of the coating hood.

None of the cited prior art discloses a coating apparatus having means for lowering the pressure in the coating apparatus.

### [Brief description of the invention]

Surprisingly it has been discovered that a coating apparatus for applying a coating on glass containers with a chemical compound comprising:
a housing (2) with a coating tunnel,
a conveyer belt (3) moving the containers (20) through the coating tunnel from the inlet (5) to the outlet (6) of the said coating tunnel,
at least one circuit(7) for circulation of a coating compound and
means (25) for lowering the pressure in the coating apparatus;
solves some of the above mentioned problems.

It has also been found that a process of applying a coating on the surface of glass containers comprising the steps of:
- conveying the glass containers (20) on a conveyer belt (3) through a coating tunnel inside a housing (1) from the inlet (5) to the outlet (6),
- circulating a coating compound through the coating tunnel with a circuit (7),
- using means (25) for lowering the pressure in the coating apparatus,
can solve some the above mentioned problems.

Surprisingly it has also been discovered that the use means (25) for lowering the pressure in the coating apparatus in a coating apparatus for applying a coating on glass containers with a chemical compound comprising:
a housing (2) with a coating tunnel,
a conveyer belt (3) moving the containers (20) through the coating tunnel from the inlet (5) to the outlet (6) of the said coating tunnel,
at least one circuit(7) for circulation of a coating compound solves some the above mentioned problems.

Surprisingly it has also been discovered that the introduction of means for lowering the pressure in the coating apparatus to the coating apparatus for applying a coating on glass containers with a chemical compound, reduces the consumption of the coating chemical and/or lower the discharge of the coating chemical.

The invention is best understood from the following detailed description when read in connected with the accompanying drawings with the following figures:
Figure 1a: schematic representation of existing hood from the state of the art.
Figure 1b: schematic representation of another existing hood from the state of the art with other loop configuration, namely a recirculation loop (8) and half open loop (9).
Figure 2: schematic representation of existing hood from the state of the art with shown slots in the inner side wall.
Figure 3: schematic representation of the hood according to one embodiment of the present invention with means (25) for lowering the pressure in the coating apparatus. The means for lowering the pressure in the coating apparatus are represented by the grey rectangle (25a) and (25b). The air curtain is represented by the grey rectangle and embodiments are more detailed in figure 4.
Figure 4: schematic representation of one embodiment of the air curtain (25a) or (25b). As an example an air curtain (25b) at the outlet (6) is given. In the right part of figure 4 the grey rectangle is given to better show the mechanical parts of the air curtain (25b). The air curtain (25b) comprises the lateral air flow (100) perpendicular towards the conveyer belt (3), one blower (50), one jet slot (40) and an exhaust blower (55).
Figure 5: front view in the y/z plane of the air curtains (25a) or (25b), where the air flow (100) direction is indicated by flashes.
Figure 6: schematic representation of the hood according to one embodiment of the present invention with means (25) for lowering the pressure in the coating apparatus. The means for lowering the pressure in the coating apparatus are represented by the grey rectangle (25c).
Figure 7: schematic representation of the hood according to one embodiment of the present invention with means (25) for lowering the pressure in the coating apparatus. The means for lowering the pressure in the coating apparatus are represented by the grey rectangle (25d)..

### [Detailed description of the invention]

In a first aspect, the present invention relates to a coating apparatus for applying a coating on glass containers with a chemical compound comprising:
- a housing (2) with a coating tunnel
- a conveyer belt (3) moving the containers (20) through the coating tunnel from the inlet (5) to the outlet (6) of the said coating tunnel
- at least one circuit(7) for circulation of a coating compound and
- means (25) for lowering the pressure in the coating apparatus.

In a second aspect the present invention relates to a process of applying a coating on the surface of glass containers comprising the steps of:
- conveying the glass containers (20) on a conveyer belt (3) through a coating tunnel inside a housing (1) from the inlet (5) to the outlet (6),
- circulating a coating compound through the coating tunnel with a circuit (7)
- using means (25) for lowering the pressure in the coating apparatus.

In a third aspect, the present invention relates to the use of means (25) for lowering the pressure in the coating apparatus in a coating apparatus for applying a coating on glass containers with a chemical compound comprising:
- a housing (2) with a coating tunnel
- a conveyer belt (3) moving the containers (20) through the coating tunnel from the inlet (5) to the outlet (6) of the said coating tunnel
- at least one circuit (7) for circulation of a coating compound.

According to another aspect the present invention relates to a glass container on which a coating has been applied on its surface by a process comprising the steps of:
- conveying the glass container (20) through a coating tunnel from the inlet (5) to the outlet (6),
- -circulating a coating compound through the coating tunnel with a circuit (7) comprising (25)
- using means (25) for lowering the pressure in the coating apparatus.

According to an additional aspect the present invention relates to the use of a coating apparatus for applying a coating on the surface of a glass container, said coating apparatus is comprising:
a housing (2) with a coating tunnel
a conveyer belt (3) moving the containers (20) through the coating tunnel from the inlet (5) to the outlet (6) of the said coating tunnel
at least one circuit(7) for circulation of a coating compound and
means (25) for lowering the pressure in the coating apparatus).

Additionally the coating apparatus for applying a coating on glass containers with a chemical compound comprises blowing means (12), slots (30) in the inner side wall (80).

A circuit (7) for circulation the coating compound is also called loop. The coating apparatus can also comprise several circuits or loops. It comprises at least one circuit or primary loop, where the coating compound or coating generation compound is added. This place where the coating compound or coating generation compound is added is called feed point.

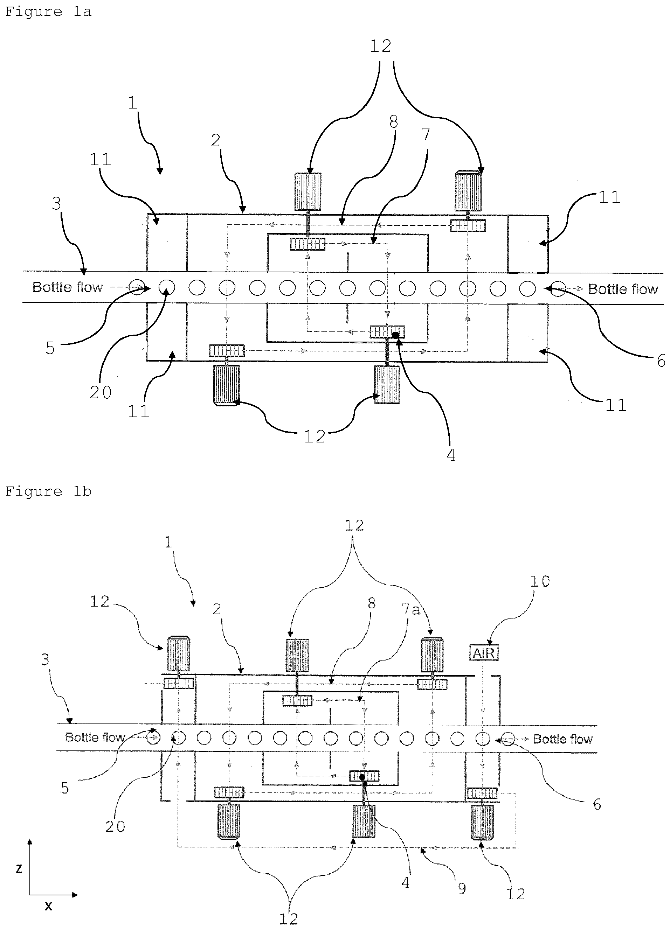

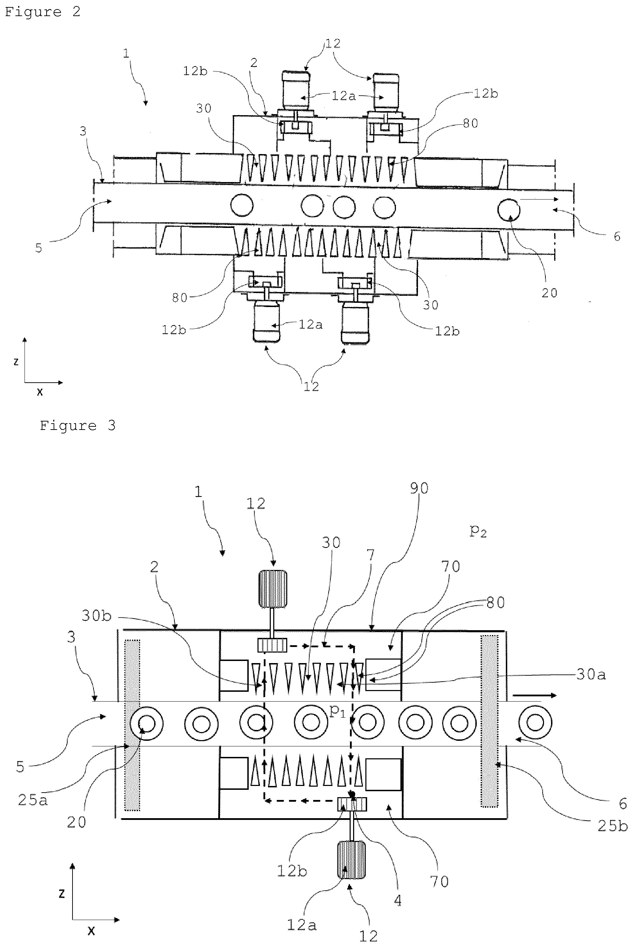

According to a variation of the present invention the coating apparatus can also comprise one or more recirculating loops (8). The recirculating loop or loops (8) is or are after the primary loop (7a) and before the carrier gas flow that is separated, in the sense of the direction of the passing containers on the conveyer belt. Such a recirculating loop (8) is not shown in figure 2 and 3, but is well known from prior art as presented in figure 1.

By the generic term "air" as used is denoted the carrier gas that is used for the coating compound. It is obvious that any inert gas or a gas that is inert to the coating compound, the container and the interior of the coating hood, such as nitrogen could be used. Because of its convenience and low cost however the preferred gas is air.

By the term "coating compound" as used in the present invention is denoted a chemical compound that is introduced in the coating apparatus. The coating compound is used directly to coat a surface or it is transformed during the coating application in another compound that forms the coating. In the latter case it could also be called coating generating compound.

By the term "exhaust" as used is denoted the carrier gas that is still loaded with a minor quantity of the coating compound not applied to the glass container that escapes at the entry and especially the outlet of the coating tunnel, where the containers enter and sort.

By the term "loop" as used in the present invention is denoted a circuit for the carrier gas or air loaded with the coating compound that enters and leaves the coating tunnel. Such a loop comprises at least one jet slot and at least one receiving slot that are located on the opposite inner side walls of the hood. The loop could comprises also conduits in form of tubes and pipes. These conduits in form of tubes and pipes are necessary to transport the carrier gas from the receiving slot to the jet slot

By the term "primary loop" as used in the present invention is denoted a circuit that comprises at least a feed point of the coating compound and circulates the carrier gas loaded with the coating compound or air loaded with the coating compound. The loop or circuit enters and leaves twice the coating tunnel by respective jet slots and receiving slots. In other words the loop or circuit makes a complete 360° turn.

By the term "recirculating loop" as used in the present invention is denoted a circuit that does not comprise any feed point and that recirculates the carrier gas loaded with the coating compound or air loaded with the coating compound coming from the primary loop.

By the term "circuit" as used in the present invention is denoted a pathway for the circular flow of the carrier gas or air comprising the coating compound or coating generating compound through the respective parts of the coating apparatus.

By the term "lowering the pressure in the coating apparatus" as used in the present invention is meant that the pressure inside the coating apparatus is lower than on the outside. This can be achieved by either decreasing the pressure inside the coating apparatus or by increasing the pressure outside the coating apparatus.

By the term "air curtain" as used in the present invention is meant an air flow lateral to the movement of the conveyer belt and the mechanical parts or means for establishing the air flow. The air curtain or the air of the air curtain preferably does not comprise coating compound at least not voluntary. However it is possible that some traces of coating compound could be present due to contamination.

**With regard to a coating apparatus from the prior art,** an embodiment of said coating apparatus is shown in figure 1a. The coating apparatus (1) comprises a housing (2) with coating tunnel, a conveyer belt (3) moving the containers (20) through the coating tunnel from the inlet (5) to the outlet (6) of the said coating tunnel, one circuit being the primary loop (7) with at least one feed point (4) for the coating compound, one or more circuits being recirculating loops (8), blowing means (12) and exhaust means (11) in proximity of the inlet (5) end outlet (6). Details of such a coating apparatus and its components can be found in document US 4,668,268 or US 4,389,234.

**Still with regard to a coating apparatus from the prior art,** another embodiment of such a coating apparatus (1) is shown in figure 1b. Said coating apparatus comprises a housing (2) with coating tunnel, a conveyer belt (3) moving the containers (20) through the coating tunnel from the inlet (5) to the outlet (6) of the said coating tunnel, one primary loop (7) with at least one feed point (4) for the coating compound, blowing means (12), optionally one or more recirculating loops (8) and a half open loop (9) going from the outlet (6) to the inlet (5) of the coating tunnel. Details of such a coating apparatus and its components can be found in document WO2014/177651. The function of the half open loop (9) is to recover coating compounds at the end of the hood, close to the outlet (6) and reintroduce into the coating process by transferring it to the inlet.

**Still with regard to a coating apparatus from the prior art,** another embodiment of such a coating apparatus (1) is shown in figure 2. Said coating apparatus comprises a housing (2) with coating tunnel, a conveyer belt (3) moving the containers (20) through the coating tunnel from the inlet (5) to the outlet (6) of the said coating tunnel, blowing means (12) comprising a blower wheel (12a) and a motor (12a) for turning the blower wheel, for circulating the coating compound through the circuits or respective loops of the coating tunnel and inner side wall (80) with slots (30). Details of such a coating apparatus and its components can be found in document US 5,140,940.

**With regard to the coating apparatus of** the present invention, it is shown schematically for one embodiment in figure 3, said coating apparatus (1) comprises a housing (2) with coating tunnel, a conveyer belt (3) moving the containers (20) through the coating tunnel from the inlet (5) to the outlet (6) of the said coating tunnel, one primary loop (7) with a least one feed point (4) for the coating compound, blowing means (12), and means (25) for lowering the pressure in the coating apparatus.

Optionally the coating apparatus of the present invention can comprise one or more recirculating loops.

In a one embodiment the coating hood according to the invention comprises additionally one or more recirculating loops.

The position of the recirculating loop or recirculating loops can be behind the primary loop (in view of the movement of the conveyer belt) or around the primary loop, latter possibility as shown in figure 1 and 2 of the coating apparatus from the prior art.

Additionally the coating apparatus comprises at least one jet slot (30a) and receiver slot (30b) in the inner side wall (80), which are not shown in the figure 1. The slots (30) are respectively the entry or exit of the circuit (7) or each respective loop towards or from the central chamber of the coating tunnel, where the conveyer belt (3) with the containers (20) passes. By the jet slot (30a) the coating compound or carrier gas enters this chamber. By the receiver slot (30b) the coating compound or carrier gas leaves this chamber.

Preferably each circuit or loop of the coating apparatus (1) comprises at least one jet slot (30a) and receiver slot (30b).

Additionally the coating apparatus comprises blowing means or blowers (12). These blowers (12) keep the carrier gas with the coating compound circulating inside the hood and make it passing through the respective loops. The blower can either push the carrier gas with coating compound forward inside the centre section of the tunnel where the conveyer belt with the container passes or suck it outside. The blowing means (12) comprises a blower wheel (12b) and a motor (12a) for rotating the blower wheel. Depending on the sense of the rotation of the blower wheel and its blades, the carrier gas with the coating compound is either pushed or sucked.

**The coating apparatus of** the present invention comprises means (25) for lowering the pressure in the coating apparatus. The means (25) for lowering the pressure in the coating apparatus allow to keep a lower pressure inside the coating apparatus in comparison to the outside.

Preferably the pressure p₁ inside the coating apparatus is at least 1mbar less than the pressure p₂ on the outside of the coating apparatus, more preferably at least 2mbar, still more preferably 3mbar and most preferably 5mbar. By outside of the coating apparatus is meant the direct surrounding of the coating apparatus in a perimeter of several meters at most.

Preferably the pressure p₁ inside the coating apparatus is at most 100mbar less than the pressure p₂ on the outside of the coating apparatus.

Advantageously the pressure difference Δp=p₂-p₁ between the pressure p₂ on the outside of the coating apparatus and the pressure p₁ inside the coating apparatus is between 1mmbar and 100mbar.

It is obvious that the pressure p of gasses is a function of the temperature T, but the relation between the two of them is well known by the respective physical gas laws. The pressures p₁ and p₂ correspond the pressures at the given temperatures inside and outside the coating apparatus.

**With regard to the** means (25) for lowering the pressure in the coating apparatus they can be inside the coating apparatus or outside the coating apparatus.

**In a first preferred embodiment the** means (25) for lowering the pressure in the coating apparatus **are air curtains (25a) and** (25b), **a** first (25a) at the inlet (5) and a second (25b) at the outlet (6), by this is meant that they are situated respectively between the loop or circuit or loops or circuits and other means that circulate the coating compound through the coating tunnel and the inlet (5) or outlet (6) of the coating apparatus (1).

The air curtain (25a) is close to the inlet (5) and is kind of the entry into the inner chamber of coating apparatus.

The air curtain (25b) is close to the outlet (6) the exit out of the inner chamber of coating apparatus.

By inner chamber of the coating apparatus is meant the part where the coating compound is circulated. This inner chamber is situated between the two air curtains (25a) and (25b).

The air curtain (25a) (25b) comprises or consists of a blower (50) which makes a constant airflow (100) through at least one jet slot (40). The added air will be sucked off with an exhaust blower (55) in order to not add air into the hood or coating tunnel, where the coating compound is circulated.

By constant air flow is meant that the air flow is within a given interval of either speed (m/s) of passing air or a global voluminous flow (m³/s) of air or a voluminous flow over a surface ((m³/s)/m²).

In one embodiment the air curtains (25a) and (25b) can be part of the housing (2) of the coating apparatus (1).

Preferably the distance d₃ between the air curtain (25a) and the inlet (5) is less than 300mm. The distance d₃ is measured between the inlet (5) which is defined by the housing (2) of coating apparatus (1) on both sides of the conveyer belt (3) and the limit of air curtain towards the inlet (5).

Preferably the distance d₁ between the air curtain (25b) and the outlet (6) is less than 300mm. The distance d₁ is measured between the outlet (6) which is defined by the housing (2) of coating apparatus (1) on both sides of the conveyer belt (3) and the limit of air curtain towards the outlet (6).

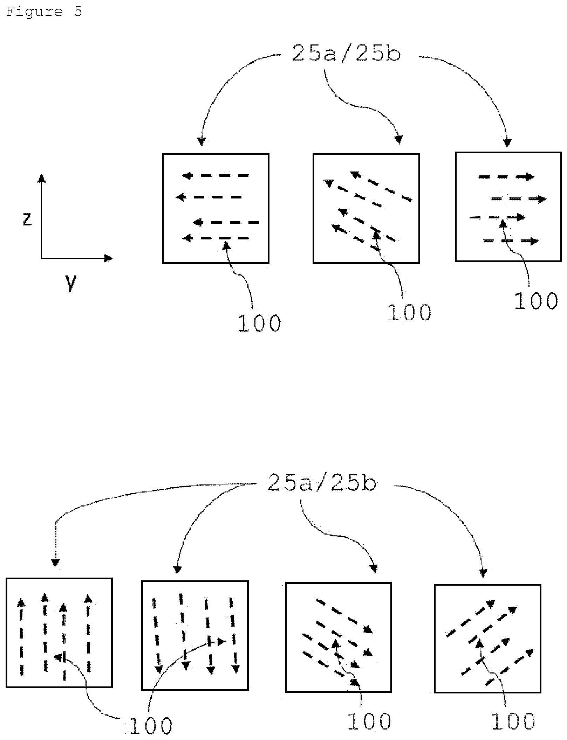

The air curtains can have different directions of the air flow (100) relatively to the conveyer belt (3). Examples are given in figure 5 where the air curtains (25a) (25b) have various directions of the air flow (100) relatively to the conveyer belt. Other directions in between the shows are easily imaginable. The air flow (100) of the air curtain is always in the y/z plane and perpendicular to the x-direction.

In a first preferred embodiment the direction of the air flow of air curtains is horizontal which means parallel in to the z-direction in the y/z plane and perpendicular to the x-direction.

**In a second preferred embodiment the** means (25) for lowering the pressure in the coating apparatus is a pump (25c). The pump is connected to the coating apparatus.

**In a third preferred embodiment the** means (25) for lowering the pressure in the coating apparatus is a cover (25d) surrounding the coating apparatus. Inside the cover (25d) the pressure is increase by introducing air so that the pressure p₁ in the coating apparatus is smaller than the pressure p₂ between the cover and the coating apparatus.

Preferably the circuit (7) or loop of the coating apparatus (1) according to the invention, comprises at least one blowing means (12) for the coating compound. More preferably the coating apparatus of the present invention comprises at least two blowing means (12), the blowing means are on opposite sides of the coating apparatus, as shown in figure 3.

Preferably the two on opposite sides situated blower wheels (12b) of the at least two blowing means circulate in different meaning opposite directions. When looking from one side at the coating apparatus, one blower wheel rotates clockwise, while the other blower wheel on the other side rotates counter clockwise.

Preferably the blower wheel or blower wheels rotate between 100rpm and 10 000rpm, more preferably between 200rpm and 9 000rpm.

Optionally the coating apparatus according to the invention can comprise means for exhaust. This can be either at the inlet or at the outlet or at the inlet and the outlet additional exhaust means are present.

The coating compound is introduced through at least one feed point (4) in to the coating apparatus. This can be an internal feed point as in figure 1 or 3 or an external feed point.

In one embodiment the feed point (4) is based at the primary loop (7) as an internal feed point as shown in figure 3. The coating compound is introduced by the means of pipes, latter are not shown in the figure.

In another embodiment the coating compound is introduced by hot recirculating air as a side stream to dose the coating compound in, which is an external feed.

The hollow glass containers are transported in a single or double line by a conveyer through a tunnel formed in the coating hood under the housing. The conveyer carries the bottles in the direction designated by the arrow, in figures 1, 2 and 3 from left to right.

**With regard to the coating compound** introduced in the coating apparatus at one or more feedings points, it can be chosen from organometallic compounds, metal halides or other suitable compounds as coating compound precursor.

Preferably the coating compound is an organic tin halogenide, advantageously it is monobutyl tin trichloride.

**With regard to the coating** formed at the surface of the containers and applied in the hood it is a metal oxide as SnO2, TiO2, Al2O3 or ZnO. The metal oxide is derived from the decomposition inorganic or organometallic compounds. Latter are the before mentioned coating generating compounds.

In a first preferred embodiment the coating is tin oxide. The tin oxide is derived from the decomposition inorganic or organic tin compound advantageously of an organic tin halogenide, more advantageously from monobutyl tin trichloride.

**With regard to the process** of applying a coating on the surface of glass containers, it comprises the steps of:
- conveying the glass containers (20) on a conveyer belt (3) through a coating tunnel inside a housing (1) from the inlet (5) to the outlet (6),
- circulating a coating compound through the coating tunnel with a circuit (7) comprising a guidance plate (25)
- using means (25) for lowering the pressure in the coating apparatus

The respective elements of the coating hood (1) in the process are the same as describe before.

The circulation step of said process, circulates the coating compound or coating generating compounds that is introduced by a feed point (4) with the carrier gas by the help of blowing means (12). The circuit of the circulation step comprises the passage of the side wall (80) via the slots (30) inside the side wall. For entering the inner part of the coating tunnel where the container (20) are on the conveyer belt, the circuit leaves the compartment (70), via the jet slots (30a). On the opposite side the circuit leaves the inner part of the coating tunnel where the container (20) are on the conveyer belt, via receiver slots (30b) and enter the opposite compartment comprising (70). To return to the initial departing point the circuit continues in the same manner as described.

The using step of means (25) for lowering the pressure in the coating apparatus of said process allows to reduce the loss of coating compound.

**With regard to the glass container** on which a coating has been applied on its surface by a process comprising the steps of:
- conveying the glass containers (20) on a conveyer belt (3) through a coating tunnel inside a housing (1) from the inlet (5) to the outlet (6),
- circulating a coating compound through the coating tunnel with a circuit (7) comprising a guidance plate (25)
- using means (25) for lowering the pressure in the coating apparatus

Preferably the glass container on which a coating has been applied on its surface by a process that comprises additionally a step of blowing the gas comprising the coating generating compound with one or more recirculating loops (8) through the coating tunnel, after the circuit of primary loop (7).

**With regard to the glass container** on which a coating has been applied on its surface by a coating apparatus comprising:
- a housing (2) with a coating tunnel
- a conveyer belt (3) moving the containers (20) through the coating tunnel from the inlet (5) to the outlet (6) of the said coating tunnel
- at least one circuit (7) for circulation of a coating compound and
- means (25) for lowering the pressure in the coating apparatus.

The coating apparatus according to the invention is used to apply a coating on the surface of a glass containers.

The present invention concerns as well an improved method for applying a hot end coating integrated in the glass container manufacturing process.

### [Figures]

**Figure 1a****:** schematic representation of one existing hood from the state of the art with a recirculating loop.
   Coating compound is introduced into the coating apparatus (1) or hood at a feed point (4). The hood (1) comprises a housing (2) and a conveyer belt (3) running there through. Containers (4) are transported on the belt that moves them from the entrance or inlet (5) to the exit outlet (6) of the hood (1).
   The containers (20) are only presented diagrammatically by circles.
   The hood also comprises one primary loop (7) with a least one feed point (4) for the coating compound, one or more recirculating loops (8) and exhaust means (11) in proximity of the inlet (5) end outlet (6).
**Figure 1b****:** schematic representation of one existing hood with an additional half loop (9).
   Coating compound is introduced into the coating apparatus (1) or hood at a feed point (4). The hood (1) comprises a housing (2) and a conveyer belt (3) running there through. Containers (4) are transported on the belt, that moves them from the entrance or inlet (5) to the exit outlet (6) of the hood (1).
   The containers (20) are only presented diagrammatically by circles.
   The hood also comprises one primary loop (7) with a least one feed point (4) for the coating compound, one or more recirculating loops (8) and a half open loop (9) going from the outlet (6) to the inlet (5) of the coating tunnel.
**Figure 2****:** schematic representation of another existing hood from the state of the art where the inner side wall (80) with the slots (30) is more detailed. The hood (1) comprises a housing (2) and a conveyer belt (3) running there through. Containers (4) are transported on the belt that moves them from the entrance or inlet (5) to the exit outlet (6) of the hood (1). Behind the inner side wall (80) with the slots (30) blowing means (12) are shown, comprising a blower wheel (12b) and a motor (12a).

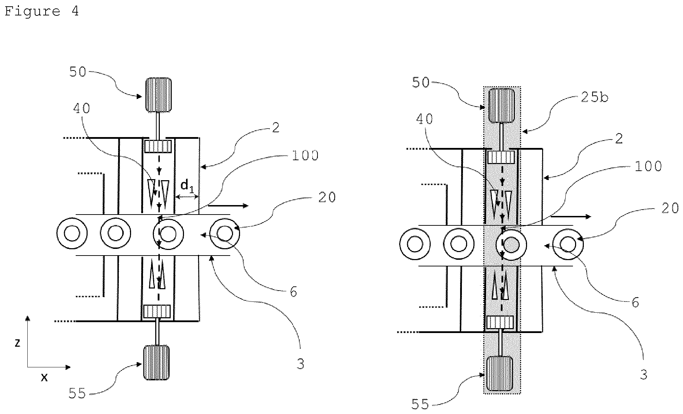

**Figure 3****:** schematic representation of the hood according to one embodiment of the means (25) of the present invention with two air curtains (25a) (25b) a first at the inlet (5) and a second at the outlet (6). The air curtain is represented by the grey rectangle and embodiments are more detailed in figures 4, figures 7 and figures 8. The inner side wall (80) of the hood comprises the slots (30).The hood (1) comprises a housing (2) and a conveyer belt (3) running there through. Containers (4) are transported on the belt that moves them from the entrance or inlet (5) to the exit outlet (6) of the hood (1). Behind the inner side wall (80) with the slots (30) blowing means (12) are shown, comprising a blower wheel (12b) and a motor (12a). The coating generating compound is introduced by a feed point (4) with the carrier gas by the help of blowing means (12). The circuit comprises the passage of the side wall (80) via the slots (30) inside the side wall. For entering the inner part of the coating tunnel where the container (20) are on the conveyer belt, the circuit leaves the compartment (70) via the jet slots (30a). On the opposite side the circuit leaves the inner part of the coating tunnel where the container (20) are on the conveyer belt, via receiver slots (30b) and enter the opposite compartment (70) . The blowing means on this side will continue to circulate the left over coating generating compound in the same manner as explained before and a part of the coating generating compound returns to the initial departing point and the circuit begins again. The pressure p₂ outside the coating apparatus and pressure p₁ inside the coating apparatus are indicated.
**Figure 4****: s**chematic representation of one embodiment of the air curtain (25a) or (25b) in the z/x plane. As an example an air curtain (25b) at the outlet (6) is given. The grey rectangle details the elements not shown in figure 3. In the right part of figure 4 the grey rectangle is given to better show the mechanical parts of the air curtain (25b). The air curtain (25b) comprises the lateral air flow (100) perpendicular towards the conveyer belt (3), one blower (50), one jet slot (40), an exhaust blower (55). The distance d1 between the air curtain and the outlet (6) is shown. The air curtain (25a) at the inlet (5) is not shown, but is identical the other way round.
**Figure 5****:** front view in the y/z plane of the air curtains (25a) or (25b), where the air flow (100) direction is indicated by flashes. More directions are imaginable than shown in the figures.

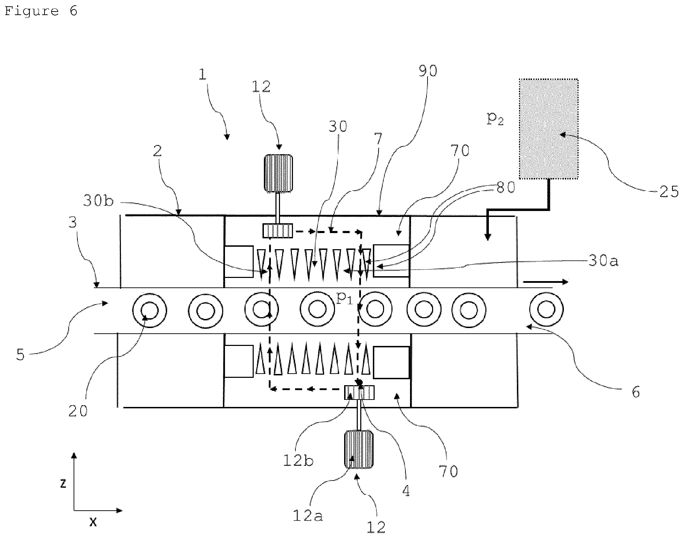

**Figure 6****:** schematic representation of the hood according to one embodiment of the means (25) of the present invention with a pump (25c) connected to the coating apparatus. The pressure p₂ outside the coating apparatus and pressure p₁ inside the coating apparatus are indicated.

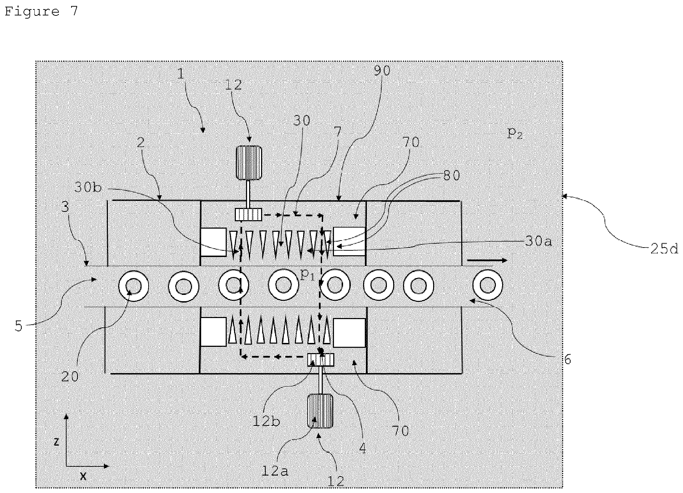

**Figure 7****:** schematic representation of the hood according to one embodiment of the means (25) of the present invention with surroundings of the coating apparatus. The pressure p₂ outside the coating apparatus and pressure p₁ inside the coating apparatus are indicated.

## Claims

1. A coating apparatus (1) for applying a coating on glass containers with a chemical compound comprising:
a housing (2) with a coating tunnel
a conveyer belt (3) moving the containers (20) through the coating tunnel from the inlet (5) to the outlet (6) of the said coating tunnel
at least one circuit(7) for circulation of a coating compound and
means (25) for lowering the pressure in the coating apparatus.

2. The coating apparatus according to any of claims 1 to 3, characterized that pressure p₁ inside the coating apparatus is at least 1mbar less than the pressure p₂ on the outside of the coating apparatus.

3. The coating apparatus according to any of claims 8 to 9, characterized that pressure difference Δp=p₂-p₁ between the pressure p₂ on the outside of the coating apparatus and the pressure p₁ inside the coating apparatus is between 1mmbar and 100mbar.

4. The coating apparatus according to any of claims 1 to 3 characterized that said means (25) for lowering the pressure in the coating apparatus are inside the coating apparatus.

5. The coating apparatus according to any of claims 1 to 3 characterized that said means (25) for lowering the pressure in the coating apparatus are outside the coating apparatus.

6. The coating apparatus according to any of claims 1 to 3 characterized that said means (25) for lowering the pressure in the coating apparatus are air curtains (25a) and (25b).

7. The coating apparatus according to any of claims 1 to 3 characterized that said means (25) for lowering the pressure in the coating apparatus is a pump (25c).

8. The coating apparatus according to any of claims 1 to 3 characterized that said means (25) for lowering the pressure in the coating apparatus is a cover (25d) surrounding the coating apparatus.

9. The coating apparatus according to any of claims 1 to 8, characterized that it comprises)at least one of the following:
blowing means (12),
at least one feed point (4),
slots (30) in the inner side wall (80).

10. A coating apparatus according to any of claims 1 to 9, wherein the said apparatus comprises at least two blowing means (12), said blowing means are on opposite sides of the coating apparatus.

11. A coating apparatus according to claim 9, wherein said apparatus comprises two on opposite sides situated blower wheels (12b) of the at least two blowing means circulate in different meaning opposite directions.

12. A process of applying a coating on the surface of glass containers comprising the steps of:
- conveying the glass containers (20) on a conveyer belt (3) through a coating tunnel inside a housing (1) from the inlet (5) to the outlet (6),
- circulating a coating compound through the coating tunnel with a circuit (7) comprising
- using means (25) for lowering the pressure in the coating apparatus.

13. The process according to claim 10 comprising additionally the step of introducing a coating compound by a feed point (4).

14. The use of means (25) for lowering the pressure in the coating apparatus for applying a coating on glass containers with a chemical compound, said coating apparatus comprises
- a housing (2) with a coating tunnel
- a conveyer belt (3) moving the containers (20) through the coating tunnel from the inlet (5) to the outlet (6) of the said coating tunnel
- at least one circuit (7) for circulation of a coating compound.

15. Use of a coating apparatus according to any of claims 1 to 11 for applying a coating on the surface of a glass container.
